# DEMANDE DE BREVET EUROPEEN

(11) **EP 3 351 759 A1**
(43) Date de publication de la demande: **25.07.2018**
(21) Numéro de dépôt: 18150810.2
(22) Date de dépôt: 09.01.2018
(51) Int. Cl.: F01N 3/08, F01N 3/20, F01N 9/00

(54) **PROCÉDÉ DE CORRECTION D'UN DÉFICIT D'AMMONIAC STOCKÉ DANS UN CATALYSEUR D'UN SYSTÈME DE RÉDUCTION CATALYTIQUE SÉLECTIVE**

(30) Priorité: 24.01.2017 FR 1750558
(71) Demandeur: PSA Automobiles SA, 78300 Poissy (FR)
(72) Inventeur: BERNARD, Yoan, 78570 ANDRESY (FR); ZUMI, Michel, 92600 ASNIERES SUR SEINE (FR); MARECHAL, Patrice, 92250 LA GARENNE COLOMBES (FR); HERICHON, Eliam, 95800 CERGY (FR)

(57) **Abrégé**

L'invention concerne un procédé de correction d'un déficit d'ammoniac stocké dans un catalyseur d'un système (4) de réduction catalytique sélective dans une ligne (5) d'échappement d'un moteur (1) thermique dans lequel :
-on mesure la température en un premier point de la ligne (5) d'échappement compris entre la sortie du moteur (1) et l'amont du système (4),
-on mesure la température en un second point de la ligne (5) d'échappement compris entre la sortie du moteur (1) et le système (4),
caractérisé en ce que
- on détecte si un maximum local de température a été atteint à ce premier point,
- on calcule l'écart entre la température de ce maximum local et la température courante,
et si l'écart de température dépasse un premier seuil et que la mesure de la température au second point de la ligne 5 d'échappement dépasse un second seuil de température, on effectue une augmentation de la consigne de chargement.

## Description

L'invention porte sur un procédé de correction d'un déficit d'ammoniac stocké dans un catalyseur d'un système de réduction catalytique sélective dans une ligne d'échappement d'un véhicule automobile, le procédé maximisant le chargement du système sur un critère dynamique, ce déficit d'ammoniac étant consécutif à une baisse de température dans la ligne d'échappement et à une consommation plus élevée d'ammoniac par le système de réduction catalytique sélective.

Il est connu qu'une ligne d'échappement en sortie d'un moteur à combustion interne d'un véhicule automobile comprenne plusieurs éléments de dépollution sélective d'un polluant, dont un système de réduction catalytique sélective. Le système de réduction présente un injecteur en amont d'un catalyseur de réduction qui injecte un agent réducteur précurseur de l'ammoniac dans la ligne d'échappement pour la réduction d'oxydes d'azote.

Un tel système de Réduction Catalytique Sélective et dénommé sous l'acronyme RCS est aussi connu sous l'acronyme anglo-saxon de SCR. Un système RCS fonctionne par injection dans la ligne d'échappement d'un agent de dépollution dit réducteur RCS, cet agent étant avantageusement mais non limitativement de l'urée ou un dérivé de l'urée, précurseur de l'ammoniac qui est utilisé pour réduire les oxydes d'azote ou NOx.

Dans ce qui va suivre, il sera fait également référence à la dénomination complète ou à l'abréviation RCS pour désigner tout ce qui est lié à la réduction catalytique sélective. Il en ira de même pour les oxydes d'azote pouvant être désignés par NOx et pour l'ammoniac pouvant être désigné par NH3.

Un tel système RCS peut être intégré dans un filtre à particules, ceci en alternative à un système RCS indépendant ou en complément d'un tel système. Le filtre à particules est alors imprégné d'un catalyseur pour effectuer une réduction catalytique sélective des NOx. Il peut y avoir aussi deux systèmes RCS dans la ligne.

Dans un tel système RCS, une charge de NH3 est ajoutée dans le catalyseur selon une consigne de chargement en ammoniac. Cette consigne de chargement en ammoniac est régulièrement réactualisée par une unité de contrôle agissant sur l'injecteur et la quantité d'agent réducteur injectée dans la ligne d'échappement, cet agent réducteur se transformant en NH3.

Un système de post traitement de type RCS présente des limites physiques de traitement. Par exemple il est nécessaire qu'il atteigne une température minimale pour atteindre son efficacité maximale.

De plus, quand un tel système RCS est conformé selon une technologie de brique ou pain catalytique RCS, il est nécessaire d'avoir une quantité minimale de molécules de NH3 stockées dans le pain catalytique pour atteindre l'efficacité maximale.

Cette quantité minimale, aussi appelée talon NH3, est décroissante quand la température de la brique augmente. Habituellement ce talon est régulé en cours de roulage en fonction de la température interne du pain catalytique, cette température étant estimée ou mesurée.

Un tel procédé ne permet pas de répondre de façon optimale à certains cas de vie. Dans un premier exemple, quand un roulage du véhicule s'achève après une phase de forte thermique dans la ligne d'échappement, le chargement en NH3 à la fin du trajet sera faible et comme la phase de refroidissement sera réalisée moteur coupé, alors la boucle de régulation avec réactualisation de la consigne de chargement en NH3 sera inopérante. Par conséquent pour le trajet suivant, le véhicule partira avec un chargement faible en NH3.

S'il s'est écoulé suffisamment de temps entre les deux trajets, alors la ligne d'échappement sera froide. Il ne sera alors pas possible de traiter les NOx au début du trajet. Ce manque de NH3 durera le temps que le chargement en NH3 augmente au niveau du talon nécessaire.

Dans un deuxième exemple, quand un roulage engendre une forte diminution de thermique, compte tenu de l'inertie thermique de la ligne d'échappement, la régulation du stockage sera trop lente par rapport au besoin de dépollution. Il y aura alors manque de NH3 dans le catalyseur du système RCS.

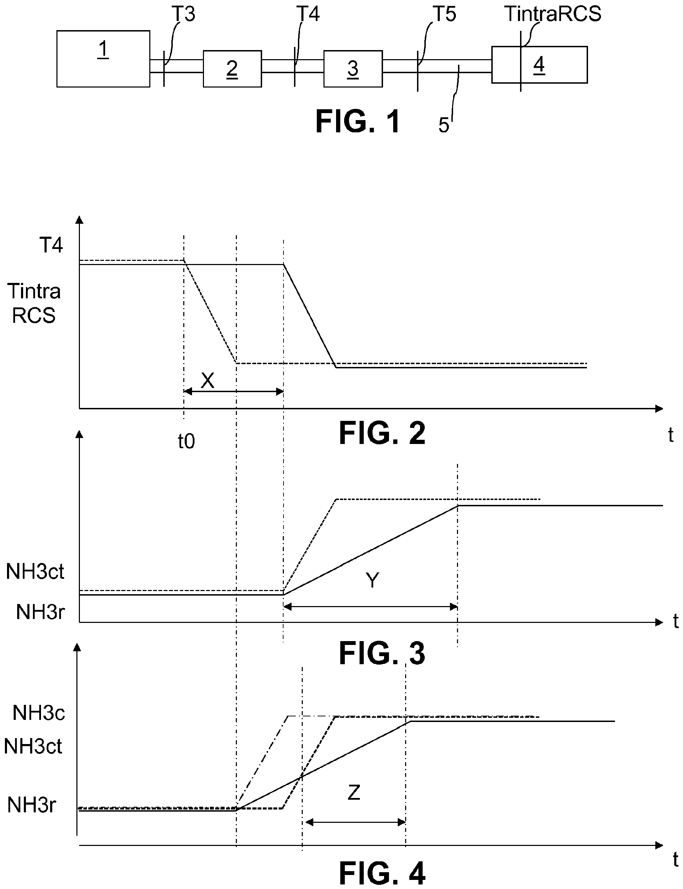

La figure 2 montre deux courbes de température en fonction du temps t montrant respectivement une température, T4, en amont du système de réduction catalytique sélective, illustrée par une courbe en pointillés, et une température à l'intérieur du catalyseur du système TintraRCS, illustrée par une courbe en trait plein. Lorsque la température T4 chute, la température à l'intérieur du catalyseur du système TintraRCS met un certain temps à chuter à son tour. A la figure 2, il est visible que la température à l'intérieur du catalyseur du système TintraRCS ne commence à chuter que X secondes après la chute de T4, température en amont du système de réduction catalytique sélective.

A cause de cette inertie thermique, la consigne de chargement de NH3 dans le catalyseur RCS, formant avantageusement un pain ou une brique, ne commence à augmenter que X secondes après la chute de la température T4. Or la convergence vers la nouvelle consigne de chargement n'est pas instantanée et possède sa propre inertie, ce qui fait que la dépollution en NOx n'est pas assurée de manière satisfaisante.

La figure 3 montre deux courbes respectivement de consigne théorique NH3ct de chargement en ammoniac, illustrée par une courbe en pointillés, et de chargement réel NH3r du catalyseur du système RCS, illustrée par une courbe en trait plein. La consigne théorique étant calculée selon un procédé conforme à l'état de la technique, on subit donc pendant Y secondes un déficit de chargement de NH3. Ceci conduit à un déficit d'efficacité.

Par conséquent, le problème la base de la présente invention est d'anticiper le plus rapidement possible les situations de vies pour lesquelles il pourrait y avoir un déficit de NH3 dans un catalyseur d'un système RCS dû à une baisse de température dans la ligne d'échappement.

Pour atteindre cet objectif, il est prévu selon l'invention un procédé de correction d'un déficit d'ammoniac stocké dans un catalyseur d'un système de réduction catalytique sélective par un agent réducteur dans une ligne d'échappement d'un moteur thermique d'un véhicule automobile, une charge d'ammoniac étant ajoutée dans le catalyseur selon une consigne de chargement en ammoniac, dans lequel :
- on mesure la température en un premier point de la ligne d'échappement compris entre la sortie du moteur et l'amont du système,
- on mesure la température en un second point de la ligne d'échappement compris entre la sortie du moteur et le système,
Dans lequel de plus :
- on détecte si un maximum local de température a été atteint à ce premier point de mesure,
- on calcule l'écart entre la température de ce maximum local et la température courante, et si l'écart de température dépasse un premier seuil et que la mesure de la température au second point de la ligne 5 d'échappement dépasse un second seuil de température, on effectue une augmentation de la consigne de chargement (NH3c) et l'injection d'agent réducteur est pilotée pour suivre cette consigne.

L'effet technique est, par une détection prématurée de la chute de la température en amont du catalyseur RCS, d'anticiper la hausse de la consigne de chargement en ammoniac pour suivre au plus près les conditions de température régissant une réactualisation de la consigne de chargement, avantageusement en augmentation de cette consigne. Grâce à cela, on améliore l'efficacité globale du système sur l'ensemble du roulage. Il est ainsi anticipé et traité les situations de vies pour lesquelles il pourrait y avoir un déficit de NH3 dans le catalyseur du système RCS, avantageusement sous forme d'une brique ou d'un pain.

Une chute de la température en amont du catalyseur va se répercuter avec retard sur le système RCS et se traduire par une chute de la température dans le catalyseur RCS. L'observation et le suivi de cette température en amont permettent d'anticiper le besoin en NH3 dans le catalyseur RCS.

Avec une température élevée dans la ligne d'échappement et donc dans le catalyseur RCS, la quantité de NH3 stockée dans le catalyseur RCS est relativement faible. Lors d'une chute de température dans la ligne d'échappement, cette quantité de NH3 formant le talon doit être augmentée. En effet, l'efficacité du système diminue pour une masse stockée constante, ce qui implique aussi la nécessité d'une augmentation du talon. Plus brutale est la chute, donc avec une valeur absolue de gradient supérieure à un premier seuil, et plus la consigne de chargement en ammoniac doit être vite augmentée.

Selon l'état de la technique, cette augmentation se faisait avec retard, ce qui laissait une période de temps avec une protection insuffisante contre le dégagement d'oxydes d'azote dans la ligne d'échappement, cette période de temps débutant après la baisse de température. Selon l'invention, cette baisse de température dans le catalyseur est anticipée et la protection dans cette période de temps est au moins partiellement assurée, cette période de temps étant considérablement raccourcie.

Il a en effet été constaté que pour l'état de la technique cette période de protection insuffisante dure entre 40 et 60 secondes alors que, dans le cadre de l'invention, cette période a été réduite entre 0 et 10 secondes. Le gain apporté par la solution selon la présente invention est donc situé entre 30 et 60 secondes de protection supplémentaire assurée.

Avantageusement, au moins un des premier et deuxième seuils est calibrable en dépendance des plages thermiques générées par le moteur et d'une architecture de la ligne d'échappement. En effet, chaque moteur et sa ligne d'échappement présentent leur inertie propre et les seuils peuvent avantageusement être adaptés à chaque type de moteur et de ligne d'échappement.

Avantageusement, le calcul de l'écart de température réalisé tant qu'un nouveau maximum local n'a pas été détecté ou qu'une fenêtre de temps prédéterminé n'a pas été dépassé, cette fenêtre de temps prédéterminée débutant à la détection du maximum local de température.

Avantageusement, la durée de la fenêtre de temps prédéterminée est de l'ordre de 30 secondes.

Avantageusement, le premier seuil varie de 50 à 100°C.

Avantageusement, le deuxième seuil peut varier de 250 à 350°C.

Avantageusement, quand la ligne d'échappement comprend un élément de dépollution en plus du système de réduction catalytique sélective, ledit au moins un élément de dépollution (3) se trouvant en amont du catalyseur du système, le premier point de mesure de la température est pris en amont de l'élément de dépollution.

Avantageusement, le premier point de mesure de la température et le second point de mesure sont identiques.

Avantageusement, le second point de mesure de la température est dans le système de réduction catalytique sélective.

L'invention concerne aussi un ensemble d'une ligne d'échappement et de son unité de contrôle, la ligne d'échappement comprenant un système de réduction catalytique sélective avec un catalyseur et un capteur de température disposé en amont du système, l'unité de contrôle calculant une consigne de charge d'ammoniac à stocker dans le catalyseur du système, caractérisé en ce qu'il met en oeuvre un procédé de correction d'un déficit d'ammoniac stocké dans le catalyseur du système selon l'une quelconque des revendications précédentes, ledit au moins un capteur de température transmettant à l'unité de contrôle des valeurs de températures relevées, l'unité de contrôle comportant des moyens de traitement des valeurs pour le calcul d'un écart de température, des moyens de mémorisation d'un premier seuil d'écart de température et d'un deuxième seuil de température , des moyens de comparaison de l'écart de de température et de la température respectivement avec les premier et deuxième seuils et des moyens de calcul d'une augmentation de la consigne de chargement (NH3c).

Avantageusement, l'ensemble comprend au moins un élément de dépollution pris unitairement ou en combinaison parmi un catalyseur d'oxydation, un catalyseur trois voies, un piège actif ou passif d'oxydes d'azote, un filtre à particules, ledit au moins un élément de dépollution étant en amont du système, ledit au moins un capteur de température étant disposé dans la ligne d'échappement en amont dudit au moins un élément de dépollution.

Avantageusement, le système de réduction catalytique comprend un réservoir d'agent réducteur à base d'urée précurseur d'ammoniac, l'agent réducteur étant injecté par un injecteur dans la ligne d'échappement, l'injecteur étant piloté par l'unité de contrôle en suivant une consigne de charge d'ammoniac à stocker dans le catalyseur du système.

L'invention concerne enfin un véhicule automobile, caractérisé en ce qu'il comprend un tel ensemble d'une ligne d'échappement et d'une unité de contrôle.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une ligne d'échappement présentant un système de réduction catalytique, une telle ligne pouvant servir pour la mise en oeuvre d'un procédé de détection selon la présente invention,
- la figure 2 montre deux courbes de température en fonction du temps illustrant respectivement une température en amont du système de réduction catalytique sélective et une température à l'intérieur du catalyseur du système,
- la figure 3 montre deux courbes respectivement de consigne théorique de chargement en ammoniac et de chargement réel du catalyseur du système RCS, la consigne théorique étant calculée selon un procédé conforme à l'état de la technique,
- la figure 4 montre trois courbes respectivement de consigne théorique de chargement en ammoniac, de consigne cible et de chargement réel du catalyseur du système RCS, la consigne cible étant calculée selon un procédé conforme à la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Les figures 2 et 3 ont déjà été décrites dans la partie introductive de la présente invention. Dans ce qui va suivre amont et aval sont pris en référence avec l'écoulement des gaz dans la ligne d'échappement.

En se référant notamment à la figure 1, la présente invention concerne un procédé de correction d'un déficit d'ammoniac stocké dans un catalyseur d'un système 4 de réduction catalytique sélective dans une ligne 5 d'échappement d'un véhicule automobile, une charge d'ammoniac étant ajoutée dans le catalyseur selon une consigne de chargement NH3c en ammoniac.

Dans le cadre de la présente invention, le déficit est dû à une non détection d'une baisse d'une température dans la ligne 5 d'échappement en amont du système 4 et à une réactualisation trop tardive de la consigne de chargement en ammoniac.

La figure 1 montre une ligne 5 d'échappement faisant partie d'un ensemble d'une ligne 5 d'échappement et de son unité de contrôle, l'unité de contrôle n'étant pas visible à la figure 1. La ligne 5 d'échappement comprend, d'une part, un système 4 de réduction catalytique sélective comprenant un catalyseur et, d'autre part, au moins un capteur de température disposé en amont du système 4, l'unité de contrôle calculant une consigne de charge d'ammoniac à stocker dans le catalyseur du système 4.

A la figure 1, sans que cela soit limitatif, le moteur 1 est un moteur 1 turbocompressé avec, dans la ligne d'échappement 5, une turbine 2 et au moins un élément de dépollution 3 qui peut être un catalyseur d'oxydation.

A la figure 1, il est montré quatre capteurs de température symbolisés par un trait vertical dont un capteur de température logé dans le catalyseur RCS relevant la température dans le catalyseur du système 4 RCS qui est TintraRCS, les autres capteurs étant en amont du catalyseur du système 4 RCS et relevant respectivement les températures T3, T4, T5.

A la figure 1, il est montré trois températures T3, T4, T5 en amont du catalyseur RCS du système 4 qui lui-même est à la température TintraRCS, prises chacune par un capteur de température respectif.

La température T3 est prise entre le moteur 1 et l'amont de la turbine 2, la température T4 est prise en amont de l'élément de dépollution 3 et en aval de la turbine 2 et la température T5 est directement en amont du catalyseur du système 4 sans qu'un élément auxiliaire ne soit disposé entre le capteur de température et le catalyseur du système 4 et donc en aval de de l'élément de dépollution 3. Il est préféré que la température amont prise dans le cadre de la présente invention soit la température T4, c'est-à-dire la température prise en amont de l'élément ou d'un élément de dépollution 3.

Le moteur 1 dans le cadre de la présente invention est avantageusement Diesel et au moins un élément de dépollution peut être un catalyseur d'oxydation Diesel plus connu sous l'abréviation de DOC.

Il est possible de prévoir d'autres éléments de dépollution. Par exemple, sans être limitatif, la ligne 5 d'échappement peut comprendre au moins un élément de dépollution 3 pris unitairement ou en combinaison parmi un catalyseur d'oxydation, un catalyseur trois voies, un piège actif ou passif d'oxydes d'azote, un filtre à particules, un catalyseur de neutralisation des rejets d'ammoniac.

Dans la majorité des cas, sauf pour le catalyseur de neutralisation des rejets d'ammoniac, le ou les éléments de dépollution peuvent avantageusement être en amont du système 4 RCS. Il peut alors être disposé dans la ligne 5 d'échappement un capteur de température en amont du ou des éléments de dépollution.

En ce qui concerne un piège passif ou actif de NOx, il peut être utilisé un système de piège à oxydes d'azote sans additif du type LNT Lean NOx Trap en langue anglo-saxonne. Un tel système de piège élimine les NOx via un bref passage en richesse un ou supérieure dans les gaz en sortie du moteur 1. Les hydrocarbures en surplus réagissent avec les NOx stockés et les neutralisent en les transformant en gaz azote. Ce système est dit actif parce qu'il y une modification au contrôle moteur 1.

Il peut aussi être utilisé un autre système sous forme d'un piège passif à oxydes d'azote en tant qu'absorbeur d'oxydes d'azote passif, piège qui est aussi connu sous la dénomination de PNA Passive NOx Adsorber en langue anglo-saxonne. Ce système est dit passif parce qu'il n'y a pas de passage en richesse un ou supérieure pour son épuration en NOx.

Le catalyseur de neutralisation des rejets d'ammoniac, aussi dénommé Clean Up Catalyst ou Ammonia Slip Catalyst en langue anglo-saxonne, sert à éliminer le surplus de NH3 non utilisé pour la réduction catalytique sélective du système 4 RCS dans la ligne 5 d'échappement. Ce catalyseur de neutralisation des rejets d'ammoniac se trouve donc en aval du système 4 RCS dans la ligne 5 d'échappement.

Il peut y avoir deux systèmes 4 RCS ou un système 4 RCS intégré à un élément de dépollution 3 comme un filtre à particules, le filtre à particules étant alors imprégné d'un catalyseur RCS pour effectuer une réduction catalytique sélective des NOx.

En se référant plus particulièrement à la figure 4 tout en se référant aussi à la figure 1, dans le procédé de correction selon l'invention comprend les étapes suivantes : On mesure la température en un premier point de la ligne 5 d'échappement compris entre la sortie du moteur 1 et l'amont du système 4. Cette mesure de température peut être effectuée au point de mesure de la température T3 ou au point de mesure de la température T4 ou encore au point de mesure de la température T5. Un bon compromis est d'utiliser le point de mesure de la température T4. En effet plus on se rapproche du moteur plus on est dynamique, mais on peut être gêné par des fluctuations de température et plus on se rapproche du système 4, moins le signal de température est fluctuant mais plus le retard Z est important.
On détecte si un maximum dit local de température, a été atteint à ce premier point de la ligne 5 d'échappement. Si un maximum local de température est détecté, cela signifie que suite à ce maximum, la température au point de mesure de la ligne 5 d'échappement est désormais en baisse. Maximum local est pris ici au sens mathématique d'une fonction. Par exemple, sur la figure 2 à t0 est détecté un tel maximum local.
On calcule l'écart entre la température de ce maximum local et la température courante.
On mesure la température en un second point de la ligne 5 d'échappement compris entre la sortie du moteur 1 et le système 4.
Quand l'écart de température dépasse un premier seuil et que la mesure de la température au second point de la ligne 5 d'échappement dépasse un second seuil de température, on effectue une augmentation de la consigne de chargement NH3c, telle que montrée par la courbe avec deux pointillés différents s'alternant. Cette augmentation est anticipée par rapport à l'art antérieur. L'unité de contrôle adapte ensuite injection d'agent réducteur pour suivre cette consigne de chargement.
On peut prévoir de limiter le calcul de l'écart de température tant qu'un nouveau maximum local n'a pas été détecté ou qu'une fenêtre de temps prédéterminée n'a pas été dépassée. Ces deux conditions étant testées en parallèle. La fenêtre de temps prédéterminée débute à la détection du passage du maximum local de température. La durée de la fenêtre de temps est avantageusement de l'ordre de 30 secondes.
Le second point de mesure de température peut être le même que le premier point de mesure de température ou être dans le système 4.

La température prise au second point de mesure de température est la température au départ de la chute de température. Cette température était relativement stable précédemment et un talon ou une quantité d'ammoniac stockée dans le catalyseur du système 4 avait été estimé conformément à cette température.

Si l'écart de température est relativement élevé en étant supérieur à au premier seuil, c'est que la température réelle dans la ligne 5 d'échappement est devenue très inférieure à la température de départ et que le chargement d'ammoniac dans le catalyseur du système 4 est devenu notoirement insuffisant, ce que la mise en oeuvre du procédé selon la présente invention permet de compenser.

La présente invention permet donc d'anticiper une baisse de température dans le système 4 RCS, référencée TintraRCS à la figure 1, surtout quand cette température était initialement élevée.

Comme il est visible par comparaison des figures 3 et 4, le déficit de chargement de NH3 de Y secondes selon l'état de la technique est réduit par application d'un procédé selon l'invention, en étant référencé Z à la figure 4, avec Z étant inférieur à Y. Selon l'invention, le procédé mis en oeuvre permet une réactualisation plus rapide de la consigne de chargement NH3c en NH3, en réponse à une baisse de la température T3 à T5 dans la ligne 5 d'échappement.

La figure 4 montre en trait plein une courbe illustrant la charge réel en NH3 et référencée NH3r et une courbe en pointillés simples illustrant la consigne de charge en NH3 théorique NH3ct obtenue selon un procédé de l'état de la technique.

Au moins un des premier et deuxième seuils peuvent être calibrables en dépendance des plages thermiques générées par le moteur 1 et d'une architecture de la ligne 5 d'échappement. Par exemple, pour l'architecture de la ligne 5 d'échappement, il peut être pris en compte une distance entre un point de mesure de la température T3 à T5 amont et le catalyseur du système 4. Plus cette distance est grande et plus la différence entre température T3 à T5 amont du système 4 RCS et température TintraRCS à l'intérieur du système 4 RCS sera forte.

Le premier seuil d'écart peut varier de 50 à 100°C et le deuxième seuil de température peut varier de 250 à 350°C.

En ce qui concerne l'ensemble mettant en oeuvre un procédé de correction d'un déficit d'ammoniac stocké dans le catalyseur du système 4 tel que précédemment décrit, le capteur de température transmet à l'unité de contrôle des valeurs de températures relevées. L'unité de contrôle comporte des moyens de traitement des valeurs pour le calcul d'un écart de température, des moyens de mémorisation d'un premier seuil d'écart de température et d'un deuxième seuil de température.

L'unité de contrôle comprend des moyens de comparaison d'un écart de température et de la température respectivement avec les premier et deuxième seuils et des moyens de calcul d'une augmentation de la consigne de chargement NH3c.

Le système 4 de réduction catalytique comprend un réservoir d'agent réducteur à base d'urée précurseur d'ammoniac, l'agent réducteur étant injecté par un injecteur dans la ligne 5 d'échappement. Cet injecteur est piloté par l'unité de contrôle en suivant une consigne de charge d'ammoniac à stocker dans le catalyseur du système 4.

Comme exemple non limitatif d'une application d'un procédé de correction d'un déficit d'ammoniac stocké dans un catalyseur d'un système 4 de réduction catalytique sélective, il va être pris une situation pour laquelle le moteur 1 est éteint après une situation de forte thermique dans la ligne 5.

Si le moteur 1 est coupé pendant la phase de chargement du catalyseur RCS en NH3 alors le chargement final sera plus important avec la solution de la présente invention que pour l'état de la technique car la réactualisation de la consigne de chargement NH3c est débutée plus tôt. Ainsi le chargement initial en NH3 pour le roulage suivant sera plus important garantissant une meilleure efficacité de la dépollution en NOx lors du début du prochain roulage.

Le procédé selon la présente invention permet d'améliorer le post-traitement des NOx sur un champ de situation de vie plus vaste que celui de l'état de la technique.

L'invention concerne enfin un véhicule automobile comprenant un tel ensemble d'une ligne 5 d'échappement et d'une unité de contrôle.

## Revendications

1. Procédé de correction d'un déficit d'ammoniac stocké dans un catalyseur d'un système (4) de réduction catalytique sélective par un agent réducteur dans une ligne (5) d'échappement d'un moteur (1) thermique d'un véhicule automobile, une charge d'ammoniac étant ajoutée dans le catalyseur selon une consigne de chargement (NH3c) en ammoniac, dans lequel :
- on mesure la température en un premier point de la ligne (5) d'échappement compris entre la sortie du moteur (1) et l'amont du système (4),
- on mesure la température en un second point de la ligne (5) d'échappement compris entre la sortie du moteur (1) et le système (4),
**caractérisé en ce que**
- on détecte si un maximum local de température a été atteint à ce premier point de mesure,
- on calcule l'écart entre la température de ce maximum local et la température courante,
et si l'écart de température dépasse un premier seuil et que la mesure de la température au second point de la ligne 5 d'échappement dépasse un second seuil de température, on effectue une augmentation de la consigne de chargement (NH3c) et l'injection d'agent réducteur est pilotée pour suivre cette consigne.

2. Procédé de correction selon la revendication 1, dans lequel au moins un des premier et deuxième seuils est calibrable en dépendance des plages thermiques générées par le moteur (1) et d'une architecture de la ligne (5) d'échappement.

3. Procédé de correction selon la revendication 1 ou la revendication 2, dans lequel, le calcul de l'écart de température réalisé tant qu'un nouveau maximum local n'a pas été détecté ou qu'une fenêtre de temps prédéterminé n'a pas été dépassé, cette fenêtre de temps prédéterminée débutant à la détection du maximum local de température.

4. Procédé de correction selon la revendication 3, **caractérisé en ce que** la durée de la fenêtre de temps prédéterminée est de l'ordre de 30 secondes.

5. Procédé de correction selon l'une quelconque des revendications précédentes, dans lequel le premier seuil varie de 50 à 100°C.

6. Procédé de correction selon l'une quelconque des revendications précédentes, dans lequel le deuxième seuil varie de 250 à 350°C.

7. Procédé de correction selon l'une quelconque des revendications précédentes, dans lequel, quand la ligne (5) d'échappement comprend un élément de dépollution (3) en plus du système (4) de réduction catalytique sélective, ledit au moins un élément de dépollution (3) se trouvant en amont du catalyseur du système (4), le premier point de mesure de la température est pris en amont de l'élément de dépollution (3).

8. Procédé de correction selon la revendication précédente, dans lequel le premier point de mesure de la température et le second point de mesure sont identiques.

9. Procédé de correction selon la revendication 7, dans lequel le second point de mesure de la température est dans le système (4) de réduction catalytique sélective.

10. Ensemble d'une ligne (5) d'échappement et de son unité de contrôle, la ligne (5) d'échappement comprenant un système (4) de réduction catalytique sélective avec un catalyseur et un capteur de température disposé en amont du système (4), l'unité de contrôle calculant une consigne de charge d'ammoniac (NH3c) à stocker dans le catalyseur du système (4), **caractérisé en ce qu'**il met en oeuvre un procédé de correction d'un déficit d'ammoniac stocké dans le catalyseur du système (4) selon l'une quelconque des revendications précédentes, ledit au moins un capteur de température transmettant à l'unité de contrôle des valeurs de températures relevées, l'unité de contrôle comportant des moyens de traitement des valeurs pour le calcul d'un écart de température, des moyens de mémorisation d'un premier seuil d'écart de température et d'un deuxième seuil de température , des moyens de comparaison de l'écart de de température et de la température respectivement avec les premier et deuxième seuils et des moyens de calcul d'une augmentation de la consigne de chargement (NH3c).

11. Ensemble selon la revendication 10, lequel comprend au moins un élément de dépollution (3) pris unitairement ou en combinaison parmi un catalyseur d'oxydation, un catalyseur trois voies, un piège actif ou passif d'oxydes d'azote, un filtre à particules, ledit au moins un élément de dépollution (3) étant en amont du système (4), ledit au moins un capteur de température étant disposé dans la ligne (5) d'échappement en amont dudit au moins un élément de dépollution (3).

12. Ensemble selon l'une quelconque des revendications 10 à 11, dans lequel le système (4) de réduction catalytique comprend un réservoir d'agent réducteur à base d'urée précurseur d'ammoniac, l'agent réducteur étant injecté par un injecteur dans la ligne (5) d'échappement, l'injecteur étant piloté par l'unité de contrôle en suivant une consigne de charge d'ammoniac (NH3c) à stocker dans le catalyseur du système (4).

13. Véhicule automobile, **caractérisé en ce qu'**il comprend un ensemble d'une ligne (5) d'échappement et d'une unité de contrôle selon l'une quelconque des revendications 10 à 12.
